# EUROPEAN PATENT APPLICATION

(11) **EP 2 634 971 A1**
(43) Date of publication of application: **04.09.2013**
(21) Application number: 13156900.6
(22) Date of filing: 27.02.2013
(51) Int. Cl.: H04L 12/28

(54) **Improved interactive gateway device**

(30) Priority: 29.02.2012 BE 201200129
(71) Applicant: Fifthplay NV, 9100 Sint-Niklaas (BE)
(72) Inventor: De Witte, Wim Albert Marie-Louise, 9100 Sint-Niklaas (BE); Bodequin, Peter Robert Gabriel, 9255 Buggenhout (BE)
(74) Representative: D'Halleweyn, Nele Veerle Trees Gertrudis

(57) **Abstract**

Gateway device comprising a housing in which a microcontroller, hardware and/or software associated with the microcontroller, and storage means with audio signals are received, the hardware and/or software being configured to provide an interface for connected electronic devices, wherein the housing comprises a loudspeaker and an interaction means based on sensor operation; wherein the microcontroller is configured to control the loudspeaker for the purpose of outputting one or more of the audio signals stored in the storage means.

## Description

The present invention relates to a gateway device configured to be connected on the one hand to a back-end server via a network and to be connected on the other to a number of electronic devices at a user.

Such gateway devices are generally known. Examples of such gateway devices are described in, among others, the patent specifications with publication number EP 2 099 199 A1, EP 2 048 852 A1 in the name of applicant, and in the patent application with application number EP 12 1555 156.8 in the name of applicant.

The present invention has for its object to propose a gateway device which is user-friendly and allows more interaction with an end user.

The gateway device comprises for this purpose a housing in which a microcontroller, hardware and/or software associated with the microcontroller, and storage means are received. The hardware and/or software are configured to provide an interface for connected electronic devices. The housing comprises a loudspeaker and an interaction means based on sensor operation. Audio signals are stored in the storage means. The microcontroller is configured to control the loudspeaker for the purpose of outputting one or more of the audio signals stored in the storage means on the basis of instructions received from one or more devices of the number of electronic devices and/or from the back-end server. The interaction means based on sensor operation comprises at least one sensor and is configured to receive an input signal resulting from an action by a user and to transmit this input signal to the microcontroller.

In this way the gateway can, on the basis of instructions received by the microcontroller, communicate messages to an end user, to which the end user can respond via the interaction means. The end user can also communicate a message to the microcontroller via the interaction means. The microcontroller can then respond thereto in appropriate manner.

The audio signals are preferably speech signals but can for instance also be different types of alarm signal.

The housing of the device is preferably compact, with length and width dimensions of less than 20 cm, and a height of less than 10 cm. The housing can take a random form and can for instance be substantially beam-shaped or substantially cylindrical.

The interaction means based on sensor operation preferably comprises at least one motion sensor configured to detect a movement of the user. Such a movement is detected and then communicated to the microcontroller.

Indicator means are preferably provided in the housing. The indicator means are configured to make visible to the user a zone of the housing associated with the at least one sensor. The microcontroller is then preferably configured to activate the indicator means after outputting via the loudspeaker one or more audio signals to which a response from the user is desirable via the interaction means based on sensor operation. The indicator means can for instance be configured to illuminate the zone. Such a zone can further have a form in which a symbol is incorporated. This can for instance be a symbol which implies a determined meaning such as "yes", "no", "OK" and so on.

According to an advantageous embodiment, the interaction means based on sensor operation comprises at least a first and a second sensor respectively configured to detect a first and a second action of the user. First and second indicator means can in this case be provided which are configured to make visible to the user respectively a first and a second zone of the housing coupled to the first and the second sensor. The microcontroller is then preferably configured to activate the first and the second indicator means after outputting via the loudspeaker audio signals to which respectively a first or a second response from the user is desirable. The user can then perform the first or the second action depending on whether he/she wishes to give the first or the second response. In the case of motion sensors, the user will thus make a movement in the vicinity of the first zone or in the vicinity of the second zone in accordance with the message he/she wishes to communicate to the gateway device. Note that more than two zones and associated sensors can also be provided.

According to a further developed embodiment, an illuminating means, typically a multicolour LED, is incorporated into the housing and configured to emit light of at least a first and a second colour, wherein the microcontroller is configured to control the illuminating means to emit light of a first colour or light of a second colour in accordance with instructions received from one or more of the electronic devices connected to the gateway and/or from the back-end server.

Provided according to a preferred embodiment in the housing is a printed circuit board or PCB on which are arranged a number of connector modules configured to be connected to the number of electronic devices, and at least one motion sensor is provided on the upper side of the PCB. According to a possible embodiment, there are provided on the upper side of the PCB at least a first motion sensor extending under a first zone of the housing and a second motion sensor extending under a second zone of the housing.

The present invention will be further elucidated on the basis of a number of by no means limitative exemplary embodiments of the gateway device according to the invention, with reference to the accompanying drawings. In the drawing
figure 1 shows a diagram of an embodiment of a gateway device according to the invention in a typical network architecture; figure 2 shows in more detail a block diagram of an embodiment of a gateway device according to the invention;
figures 3A and 3B show schematic perspective views of an embodiment of a gateway device according to the invention, as seen respectively from the upper side and from the underside; and
figure 4 shows a schematic perspective view of the embodiment of figures 3A and 3B in which several components arranged in the housing have been made visible.

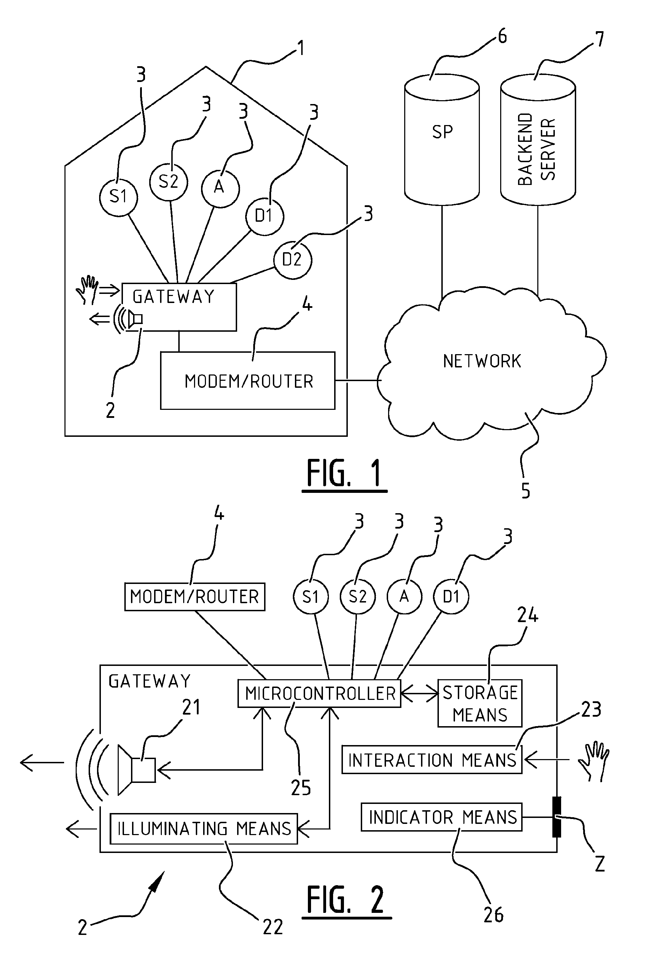

In the architecture illustrated in figure 1 a gateway device 2 is provided at an end user 1. Gateway device 2 is connected to a number of electronic devices 3 such as sensors S1, S2, an actuator A and other electronic devices D1, D2 such as computers, mobile phones, smart phones, tablets and so on. Gateway device 2 is connected via a modem or router 4 to the internet 5. An end user will typically consume services of a service provider 6 which provides services to the end user via back-end servers 7.

Examples of sensors S1, S2 and actuators A which can be coupled to gateway device 2 are 3G, WiFi and Bluetooth devices, cameras, scanners, blood pressure measuring devices, devices for measuring energy consumption and so on. A number of communication modules, such as a Bluetooth dongle module and so on, can also be provided in gateway device 2.

Gateway device 2 is a non-service specific device configured to provide a universal connectivity. In the illustrated embodiment the modem or router for connection to the network is not integrated into the gateway device. It is however also possible to provide modem, router or set-top box functionalities in the gateway device.

A more specific embodiment of a gateway device 2 is illustrated in figure 2. Gateway device 2 is on the one hand configured to be connected to the internet via the modem or router 4 and on the other configured to be connected to a number of electronic devices 3. Gateway device 2 comprises a housing in which a microcontroller 25, storage means 24, a loudspeaker 21, an illuminating means 22 and an interaction means 23 are accommodated. Further provided are hardware and software (not illustrated) configured to provide an interface for electronic devices 3.

Microcontroller 25 is configured to control loudspeaker 21, illuminating means 22 and interaction means 23 based on sensor operation on the basis of instructions received from one of the devices 3 or on the basis of instructions received via the internet from one of the back-end servers 7. Audio signals, particularly voice messages, are stored in storage means 24. Microcontroller 25 is configured to control loudspeaker 21 for the purpose of outputting one or more of the audio signals stored in the storage means. If for instance one of the devices 3 is a device for measuring energy consumption, a speech signal which gives the message "your energy consumption is too high" can then be stored in storage means 24. If the measuring device measures too high an energy consumption, microcontroller 25 can control loudspeaker 21 to have loudspeaker 21 play this voice message. A user can then respond to this voice message via the interaction means 23 based on sensor operation, for instance by indicating that he/she has received the message. The skilled person will appreciate that it is possible to envisage many other applications where a voice message is communicated to the user and the user can respond to this message via the interaction means. The voice message can for instance also be intended to remind the user that he/she has to take certain medication. The user can then indicate via interaction means 23 that he/she has taken the medication. The feedback from the user received via interaction means 23 is transmitted to microcontroller 25, which can in turn transmit this information to an electronic device 3 and/or send it via the internet.

According to an advantageous embodiment, the interaction means 23 based on sensor operation comprises at least one motion sensor configured to detect a movement of the user. Preferably further provided are indicator means 26 configured to make zone Z of the housing visible to a user. Zone Z is associated with interaction means 23. Microcontroller 25 is preferably configured to activate indicator means 26 and make this zone Z visible after loudspeaker 21 has outputted one or more audio signals to which a response from the user is desirable via interaction means 23. The indicator means are preferably configured to make zone Z visible, for instance by illuminating it. This zone can be configured such that a symbol is incorporated therein. This can for instance be a symbol representing "YES" or "NO" or a symbol representing "OK" or "cancel". It is further possible to make several zones visible simultaneously to the user in the case that different responses from a user are possible.

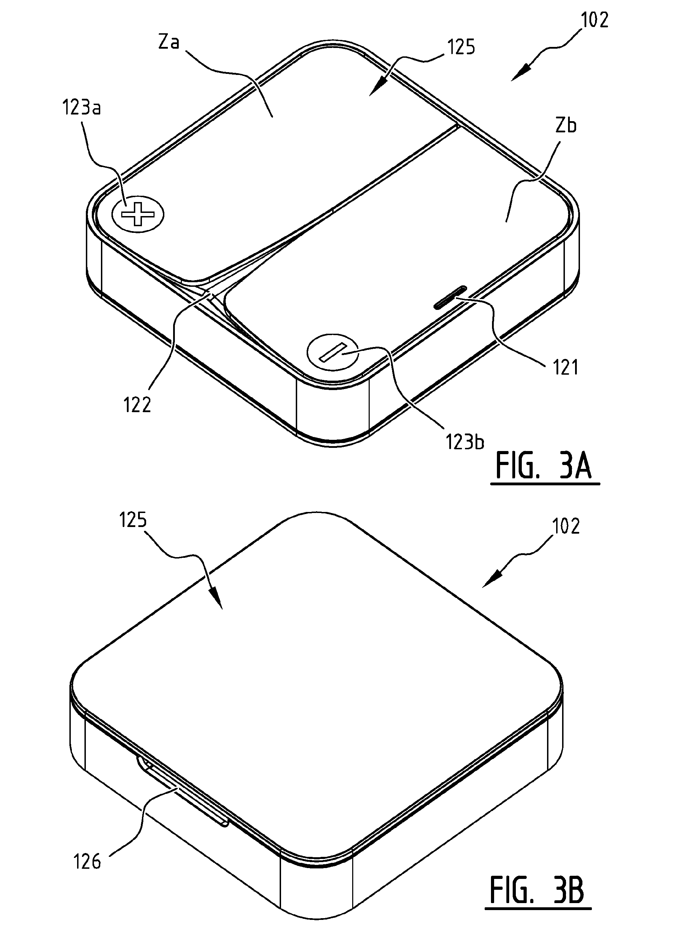

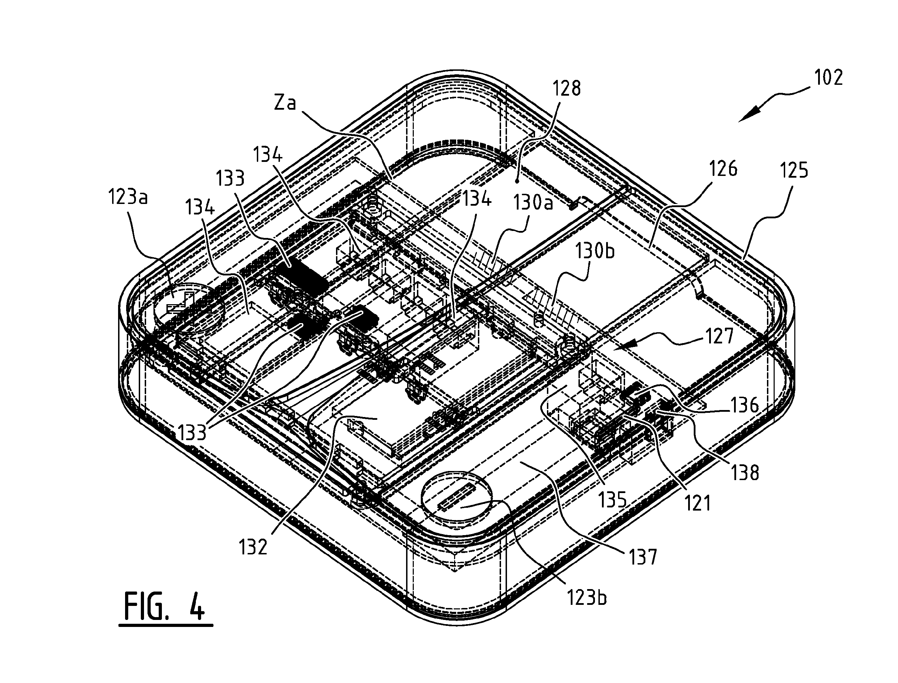

A further developed embodiment of a gateway device according to the invention will now be elucidated with reference to figures 3A, 3B and 4. Gateway device 102 comprises a housing 125 in which the different components of the gateway device are accommodated. The housing is provided with a slot-like recess 121 behind which the loudspeaker is provided. The upper side of the housing is divided into two zones Za and Zb. It is however also possible to make use of one zone, or more than two zones. The first zone Za is associated with a symbol 123a and the second zone Zb is associated with a symbol 123b. Provided in the housing are indicator means (not illustrated) to make zones Za and Zb, and particularly symbols 123a, 123b, more easily visible when a response from the user is desirable. Illuminating means can thus for instance be provided in the housing in the vicinity of symbols 123a, 123b for illumination thereof. An additional illuminating means can also be provided in the housing for the purpose of illuminating zone 122 with light of a specific colour. Different colours can be linked here to different messages, and these illuminating means thus form a second method, in addition to the loudspeaker, of outputting messages to the user.

Figure 4 illustrates a possible construction of the gateway device. A printed circuit board or PCB 127 is arranged in the housing. Provided on the underside of PCB 127 is a series of connector modules 134 for optionally wireless connection of electronic devices 3. Provided for the wired connector modules 134 are cables (not illustrated) which are carried outside from connector module 134 via space 128 and a recess 126 in the housing. Note that connector modules 134 can also be configured for a wireless communication, for instance via Bluetooth. The connector modules are provided with spring contacts 133 which are electrically coupled to contact paths on PCB 127 for further through-connection therefrom. Connector modules 134 can preferably be arranged in modular manner and can be added in accordance with the wishes of the end user.

A microcontroller 132 is provided on the upper side of PCB 127. Storage means (not illustrated) and protection circuits such as ESD protection circuits (not illustrated) can further also be provided on this side. The mounting of connector modules 134 on PCB 127 is described in more detail in the Belgian patent application in the name of applicant filed on the same day as the present patent application, and the text of which is included herein by way of reference. A first motion sensor 130a extends in a U-shape along the periphery of the upper side of PCB 127, below the zone Zb of the housing. A second motion sensor 130b likewise extends in a U-shape along the periphery of the upper side of PCB 127, on the opposite side thereof, below the zone Za of the housing. The skilled person will appreciate that these zones can also be defined in different ways and that the motion sensors can also be provided at another location on the upper side of PCB 127. The skilled person will also appreciate that the different circuits, the microcontroller and the connector modules can be arranged at other locations on the underside or upper side of the PCB.

In addition, a number of fixed sockets or connector modules, such as an ethernet socket 135, a socket 136 for a power supply cable and a USB socket 138, are typically provided on PCB 27. A USB stick 137 can also be provided.

The bottom of the housing is preferably releasable such that an installer has easy access to connector modules 134, 135, 136 and the cables (not illustrated).

The skilled person will appreciate that the present invention is not limited to the above described exemplary embodiments, and that many variants and additions can be envisaged within the scope of the invention, which is defined solely by the following claims.

## Claims

1. Gateway device configured to be connected on the one hand to a back-end server via a network and to be connected on the other to a number of electronic devices at a user, which gateway device comprises a housing in which a microcontroller, hardware and/or software associated with the microcontroller, and storage means are received, the hardware and/or software being configured to provide an interface for connected electronic devices, **characterized in that** the housing comprises a loudspeaker and an interaction means based on sensor operation;
that audio signals are stored in the storage means;
that the microcontroller is configured to control the loudspeaker for the purpose of outputting one or more of the audio signals stored in the storage means on the basis of instructions received from one or more devices of the number of electronic devices and/or from the back-end server; and
that the interaction means based on sensor operation comprises at least one sensor and is configured to receive an input signal resulting from an action by a user and to transmit this input signal to the microcontroller.

2. Gateway device as claimed in claim 1, **characterized in that** the audio signals are speech signals.

3. Gateway device as claimed in any of the foregoing claims, **characterized in that** the housing has length and width dimensions of less than 20 cm, and a height of less than 10 cm.

4. Gateway device as claimed in any of the foregoing claims, **characterized in that** the interaction means based on sensor operation comprises at least one motion sensor configured to detect a movement of the user.

5. Gateway device as claimed in any of the foregoing claims, **characterized in that** indicator means are provided which are configured to make visible to the user a zone of the housing associated with the at least one sensor, wherein the microcontroller is configured to activate the indicator means after outputting via the loudspeaker one or more audio signals to which a response from the user is desirable via the interaction means based on sensor operation.

6. Gateway device as claimed in claim 5, **characterized in that** the indicator means are configured to illuminate the zone.

7. Gateway device as claimed in claim 5 or 6, **characterized in that** the zone has a form in which a symbol is incorporated.

8. Gateway device as claimed in any of the foregoing claims, **characterized in that** the interaction means based on sensor operation comprises at least a first and a second sensor respectively configured to detect a first and a second action of the user.

9. Gateway device as claimed in claim 8, **characterized in that** first and second indicator means are provided which are configured to make visible to the user respectively a first and a second zone of the housing coupled to the first and the second sensor, wherein the microcontroller is configured to activate the first and the second indicator means after outputting via the loudspeaker audio signals to which respectively a first or a second response from the user is desirable, this such that the user can perform the first or the second action depending on whether he/she wishes to give the first or the second response.

10. Gateway device as claimed in any of the foregoing claims, **characterized in that** the interaction means based on sensor operation comprises at least one push-button.

11. Gateway device as claimed in any of the foregoing claims, **characterized in that** an illuminating means is further incorporated into the housing and configured to emit light of at least a first and a second colour, wherein the microcontroller is configured to control the illuminating means to emit light of a first colour or light of a second colour in accordance with instructions received from one or more of the electronic devices connected to the gateway and/or from the back-end server.

12. Gateway device as claimed in any of the foregoing claims, **characterized in that** provided in the housing is a PCB on which are arranged a number of connector modules configured to be connected to the number of electronic devices, and that at least one motion sensor is provided on the upper side of the PCB.

13. Gateway device as claimed in claim 12, **characterized in that** provided on the upper side of the PCB are at least a first motion sensor extending under a first zone of the housing and a second motion sensor extending under a second zone of the housing.

14. Gateway device as claimed in claim 12 or 13, **characterized in that** an ethernet socket, a socket for a power supply cable and a USB socket are further provided on the PCB.
